(19) Europäisches Patentamt
European Patent Office
Office européen des brevets

(11) **EP 3 384 257 B1**

(12) **FASCICULE DE BREVET EUROPEEN**

(45) Date de publication et mention de la délivrance du brevet:
**22.02.2023 Bulletin 2023/08**

(21) Numéro de dépôt: **16802046.9**

(22) Date de dépôt: **28.11.2016**

(51) Classification Internationale des Brevets (IPC):
*G01J 5/34* *(2006.01)*      *G06K 9/00* *(2006.01)*

(52) Classification Coopérative des Brevets (CPC):
**G01J 5/34; G06V 40/1306**

(86) Numéro de dépôt international:
**PCT/EP2016/078988**

(87) Numéro de publication internationale:
**WO 2017/093179 (08.06.2017 Gazette 2017/23)**

(54) **CAPTEUR DE MOTIF THERMIQUE**

WÄRMEMUSTERSENSOR

THERMAL PATTERN SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2015 FR 1561579**

(43) Date de publication de la demande:
**10.10.2018 Bulletin 2018/41**

(73) Titulaires:
• **Commissariat à l'Énergie Atomique et aux Énergies Alternatives 75015 Paris (FR)**
• **Idemia Identity & Security France 92400 Courbevoie (FR)**

(72) Inventeurs:
• **MAINGUET, Jean-François 38100 Grenoble (FR)**
• **SEGURA PUCHADES, Josep 38600 Fontaine (FR)**
• **VIGIER, Margaux 38360 Sassenage (FR)**

(74) Mandataire: **Brevalex Tour Trinity 1 Bis Esplanade de La Défense CS 60347 92035 Paris La Défense Cedex (FR)**

(56) Documents cités:
EP-A1- 0 798 546      EP-B1- 2 385 486
WO-A1-2008/107450      US-A1- 2009 206 851
US-B1- 6 532 040

## Description

## DOMAINE TECHNIQUE ET ART ANTÉRIEUR

L'invention se rapporte à un capteur de motif thermique, par exemple un capteur d'empreinte digitale par détection thermique.

Il est connu de réaliser un capteur d'empreinte digitale comportant des moyens de détection thermique. Ces moyens de détection thermique peuvent correspondre à des éléments pyroélectriques, des diodes, des thermistances ou tout autre élément sensible à la température permettant de convertir une variation de température en une variation de potentiel électrique ou de courant.

La détection d'empreinte digitale peut être réalisée par des capteurs dits « passifs » exploitant une différence de températures entre le doigt et le capteur, comme décrit dans les documents US 4 394 773, US 4 429 413 et US 6 289 114. Ces capteurs ont toutefois pour inconvénient de réaliser une mesure qui dépend uniquement de la différence de températures entre le doigt et le capteur. Il peut donc arriver que le niveau du signal obtenu soit nul lorsque le doigt et le capteur sont à la même température, ou que le contraste des images capturées varie et pose alors des problèmes lors du traitement ultérieur des images.

Pour éliminer les problèmes soulevés par les capteurs thermiques passifs, et surtout dans le cas d'une acquisition statique où le doigt ne bouge pas, des capteurs d'empreintes dits « actifs » ont été proposés, comme par exemple celui décrit dans les documents WO2008/107450, US 6 091 837 et EP 2 385 486 A1. Dans un tel capteur, chaque pixel comporte une capacité pyroélectrique formée de deux électrodes conductrices entre lesquelles une portion de matériau pyroélectrique est disposée, et un élément chauffant. Cet élément chauffant dissipe une certaine quantité de chaleur dans le pixel, et l'échauffement du pixel est mesuré au bout d'un certain temps d'acquisition, appelé temps d'intégration, en présence du doigt sur le capteur. Cela permet de distinguer, au niveau de chaque pixel, la présence d'une crête ou d'une vallée de l'empreinte détectée suivant que la chaleur est absorbée par la peau (pixel en présence d'une crête de l'empreinte) ou conservée dans le pixel (pixel en présence d'une vallée de l'empreinte). Cela conduit à une température finale plus faible dans le cas d'un pixel en présence d'une crête, où la chaleur est absorbée par la peau, par rapport à un pixel en présence d'une vallée.

Au premier ordre, un tel capteur permet de mesurer la capacité calorifique, également appelée chaleur massique ou capacité thermique massique, d'un élément en contact avec le capteur. Les mesures obtenues dépendent également de la conductivité thermique entre le capteur et la partie de l'élément (crête ou vallée dans le cas d'une empreinte digitale) en présence.

Pour former un capteur thermique actif, les pixels de ce capteur sont couplés à des éléments chauffants utilisant généralement l'effet Joule qui dissipe de la chaleur depuis un élément résistif qui est parcouru par un courant. Un des niveaux de l'empilement technologique formant les pixels est avantageusement utilisé pour former ces éléments chauffants. Par exemple, il possible d'utiliser un des niveaux conducteurs servant à réaliser les transistors et les interconnexions du capteur si l'un de ces niveaux comporte un matériau conducteur présentant une résistivité adéquate et sur lequel il suffit d'appliquer une des tensions déjà disponibles, par exemple la tension d'alimentation du capteur, pour générer un chauffage par effet Joule. Cela est notamment utilisé lorsque le capteur comporte des transistors de type TFT (« Thin-Film Transistor », ou transistor en couches minces) réalisés sur un substrat de verre.

Les pixels d'un tel capteur sont disposés en formant une matrice de plusieurs lignes et de plusieurs colonnes. La lecture des pixels est généralement réalisée ligne par ligne. Les éléments chauffants peuvent alors être également commandés par ligne à l'aide d'un transistor en tête de chaque ligne et ainsi ne pas avoir à rajouter de transistors de commande dans les pixels. Chaque ligne d'éléments chauffants est par exemple connectée, d'un côté de la matrice de pixels, à la masse, et de l'autre coté à un transistor de commande relié à une alimentation adaptée de manière à maîtriser le courant parcourant les éléments chauffants, et donc la puissance thermique injectée par effet Joule dans les pixels par ces éléments chauffants.

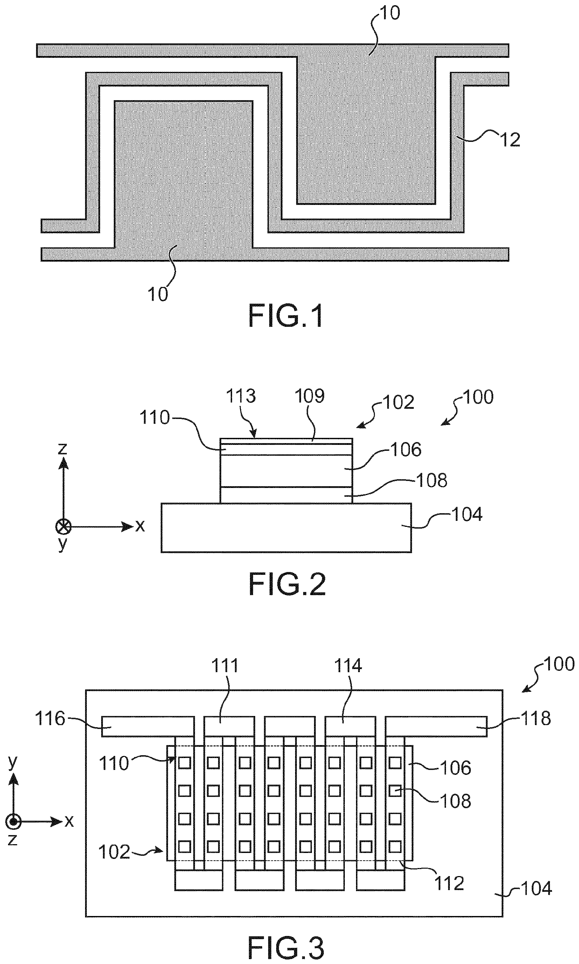

Dans le document EP 2 385 486 A1, les éléments chauffants sont réalisés à partir d'une couche métallique servant également à la réalisation des électrodes supérieures ou inférieures des capacités pyroélectriques des pixels. Ces éléments chauffants sont par exemple réalisés sous la forme d'un serpentin conducteur entourant partiellement chacune des électrodes supérieures ou inférieures dans les pixels. Une seule couche métallique sert donc à la réalisation d'éléments distincts (éléments chauffants et électrodes supérieures ou inférieures des capacités pyroélectriques) remplissant des fonctions distinctes. La figure 1 représente schématiquement une telle configuration, dans laquelle un même niveau métallique, ici le niveau métallique supérieur, sert à la réalisation des électrodes supérieures 10 et d'un serpentin conducteur 12 entourant partiellement les électrodes supérieures 10 et permettant de chauffer latéralement les capacités pyroélectriques formées au niveau des électrodes supérieures 10.

L'utilisation d'un même niveau métallique pour former ces électrodes supérieures, ou inférieures, et les éléments chauffants a toutefois pour inconvénient d'aboutir à une disposition des éléments chauffants à côté des capacités pyroélectriques des pixels. Ces éléments chauffants réalisent donc un chauffage latéral des capacités pyroélectriques. Or, un tel chauffage latéral n'est pas optimal, notamment lorsque ce pixel fait appel à un matériau pyroélectrique qui n'est pas un bon conducteur thermique.

Il est possible de réaliser les éléments chauffants en utilisant un niveau métallique supplémentaire, différent de ceux servant à la réalisation des électrodes supérieures ou inférieures des capacités pyroélectriques, disposé au-dessus ou en-dessous des pixels. Cela a toutefois pour inconvénient d'éloigner les éléments chauffants des capacités pyroélectriques. De plus, l'ajout d'un tel niveau métallique représente un coût supplémentaire par rapport à la solution précédente qui utilise un même niveau métallique pour former les électrodes supérieures ou inférieures des capacités pyroélectriques et les éléments chauffants.

## EXPOSÉ DE L'INVENTION

Un but de la présente invention est de proposer un capteur de motif thermique actif, c'est-à-dire comportant des éléments chauffants des pixels du capteur, ne présentant pas les inconvénients des capteurs actifs de l'art antérieur.

Pour cela, la présente invention propose un capteur de motif thermique selon la revendication 1.

Il est donc proposé d'utiliser directement l'une des électrodes inférieure et supérieure de la capacité pyroélectrique du pixel pour former l'élément chauffant destiné à chauffer la portion de matériau pyroélectrique. Ainsi, l'élément chauffant se trouve au plus près du matériau pyroélectrique destiné à être chauffé, ce qui augmente fortement la quantité de chaleur qui lui est transmise par l'élément chauffant par rapport à la configuration de l'art antérieur dans laquelle l'élément chauffant est formé à partir de la même couche électriquement conductrice que celle servant à la réalisation d'une des électrodes supérieure et inférieure mais qui est disposé à côté de la capacité pyroélectrique. Cette augmentation de la capacité de chauffage se retrouve également par rapport à un élément chauffant formé dans un niveau métallique supplémentaire autre que ceux servant à la réalisation des électrodes des capacités pyroélectriques.

L'invention propose, de manière non évidente, d'utiliser directement l'une des électrodes de la capacité pyroélectrique d'un pixel pour former l'élément chauffant de ce pixel, ce qui revient à utiliser une résistance de chauffage du pixel servant également à la polarisation de la capacité pyroélectrique du pixel. Cela est possible du fait que l'application d'une tension de chauffage constante sur l'élément électriquement conducteur formant à la fois l'une des électrodes de la capacité pyroélectrique du pixel et l'élément chauffant est également utilisable en tant que telle pour polariser la capacité pyroélectrique.

Un tel capteur a également pour avantage de simplifier le design de réalisation des électrodes par rapport aux capteurs de l'art antérieur dans lesquels les éléments chauffants et les électrodes supérieures sont réalisés à partir d'une même couche conductrice mais en formant des éléments distincts.

La tension de chauffage appliquée sur l'électrode formant l'élément chauffant est telle qu'une différence de potentiels électriques non nulle est obtenue entre deux extrémités, ou deux bornes, de cette électrode, engendrant ainsi une circulation d'un courant de chauffage à travers cette électrode. Ce courant est suffisamment important pour que l'effet Joule obtenu permette de réaliser la mesure du motif thermique. Ce n'est pas le cas lorsqu'un potentiel électrique constant est appliqué sur l'ensemble d'un élément conducteur car dans ce cas, aucune différence de potentiels électriques n'est obtenue aux bornes de cet élément conducteur, et donc aucune circulation de courant permettant un chauffage de cet élément conducteur n'est obtenue.

Ladite autre des électrodes inférieure et supérieure peut comporter des extrémités aux bornes desquelles une tension de chauffage est appliquée, créant une différence de potentiels électriques non nulle entre ces extrémités. Le capteur comporte des moyens d'application de cette tension de chauffage. Lors d'une mesure du motif thermique, les valeurs de ces potentiels électriques peuvent être sensiblement constantes tout au long de la mesure.

L'expression « apte à chauffer la portion de matériau pyroélectrique de la capacité pyroélectrique dudit pixel par effet Joule lors d'une mesure du motif thermique par la capacité pyroélectrique dudit pixel » signifie que l'effet Joule obtenu est suffisamment important pour qu'à la fin d'un certain temps de mesure (le temps d'intégration), la mesure obtenue, c'est-à-dire la variation de charges électriques dans la capacité pyroélectrique, correspondant à la différence de températures mesurée, soit significative pour détecter le motif thermique. Ainsi, des fuites de courant indésirables ne permettent pas d'obtenir une variation de charges électriques significative pour détecter le motif thermique. L'effet Joule obtenu peut être tel qu'une variation de températures d'au moins 0,5 K, par exemple environ 1 K, du matériau pyroélectrique entre un pixel en contact avec de la peau et un pixel qui n'est pas en contact avec de la peau peut être obtenue. Le choix de la valeur de cette variation de température dépend notamment de la sensibilité du matériau pyroélectrique, de la taille du pixel et du bruit du circuit de lecture.

L'expression « motif thermique » désigne une répartition spatiale des caractéristiques thermiques d'un objet qui est détectable par le capteur, par exemple le motif d'une empreinte digitale.

Le capteur est apte à mesurer le motif thermique d'un élément par contact direct (et non via un rayonnement de cet élément comme dans le cas d'un capteur mesurant, à distance, une température) entre le capteur et cet élément. L'élément est disposé contre le capteur lors de la mesure du motif thermique de cet élément, avec un contact thermique réalisé entre l'élément et le capteur.

L'électrode de lecture d'un pixel correspond à l'électrode sur laquelle les charges électriques générées dans la capacité pyroélectrique du pixel sont récupérées puis envoyées dans un circuit de lecture du capteur.

Le matériau pyroélectrique peut comporter par exemple un polyfluorure de vinylidène ou PVDF, et/ou un polyfluorure de vinylidène-trifluoroéthylène ou P(VDF-TrFE), et/ou une céramique telle que du PZT (titano-zirconate de plomb, ou « Lead Zirconate Titanate » en anglais), et/ou des cristaux tels que ceux connus sous l'acronyme TGS (Tris Glycine SDF) ou des cristaux LiTaO$_3$. D'autres matériaux pyroélectriques sont possibles, notamment tous ceux qui produisent des charges électriques en fonction d'un paramètre pyro-piézoélectrique.

Cette configuration est avantageuse car la structure du capteur, qui intègre au plus près l'élément chauffant vis-à-vis du matériau pyroélectrique, compense la faible conductivité thermique du PVDF, ou de tout autre matériau pyroélectrique à faible conductivité thermique.

Le capteur peut comporter en outre un substrat sur lequel sont disposées les capacités pyroélectriques des pixels, l'électrode inférieure de la capacité pyroélectrique de chaque pixel pouvant être disposée entre le substrat et la portion de matériau pyroélectrique de la capacité pyroélectrique du pixel, et l'électrode supérieure de la capacité pyroélectrique de chaque pixel peut former l'élément chauffant dudit pixel. Dans cette configuration, il est proposé d'utiliser l'électrode supérieure de la capacité pyroélectrique du pixel comme résistance chauffante et comme électrode de polarisation sur laquelle un potentiel électrique constant est appliqué. C'est dans ce cas l'électrode inférieure, c'est-à-dire celle la plus proche du substrat, qui sert d'électrode de lecture des charges électriques générées dans le pixel.

Les électrodes des capacités pyroélectriques des pixels correspondant aux électrodes de lecture des pixels peuvent être formées par des premières portions de matériau électriquement conducteur distinctes et isolées électriquement les unes des autres.

Les électrodes des capacités pyroélectriques des pixels correspondant aux éléments chauffants peuvent être reliées électriquement entre elles et être formées par au moins une deuxième portion de matériau électriquement conducteur dotée de deux extrémités sur lesquelles une tension de chauffage du matériau pyroélectrique des capacités pyroélectriques desdits pixels est apte à être appliquée. Dans cette configuration, la tension de chauffage destinée à être appliquée aux extrémités de la deuxième portion de matériau électriquement conducteur forme également les potentiels de polarisation des capacités pyroélectriques desdits pixels. Ces potentiels sont différents d'un pixel à l'autre. En maintenant une tension de chauffage constante lors d'une mesure, les potentiels de polarisation sont donc également constants tout au long de la mesure, ce qui permet au final de mesurer la variation de charges électriques créées dans les capacités pyroélectriques.

Dans un mode de réalisation avantageux, le capteur peut être tel que :

- les pixels sont disposés en formant une matrice de plusieurs lignes et plusieurs colonnes de pixels,
- les électrodes des capacités pyroélectriques de chaque ligne de pixels correspondant aux éléments chauffants sont reliées électriquement entre elles et sont formées par une deuxième portion de matériau électriquement conducteur distincte des deuxièmes portions de matériau électriquement conducteur des autres lignes de pixels,
- chaque deuxième portion de matériau électriquement conducteur comporte deux extrémités sur lesquelles une tension de chauffage du matériau pyroélectrique des capacités pyroélectriques de la ligne de pixels est apte à être appliquée.

Dans ce mode de réalisation avantageux, les électrodes formant les éléments chauffants de chaque ligne de pixels peuvent correspondre à une seule deuxième portion de matériau électriquement conducteur. Des tensions de chauffage distinctes (mais pas nécessairement de valeurs différentes) sont destinées à être appliquées aux extrémités de chacune des deuxièmes portions de matériau électriquement conducteur. Chaque ligne de pixels est donc chauffée indépendamment l'une de l'autre, ce qui est bien adapté lorsque la matrice de pixels est lue ligne par ligne car cela évite de chauffer inutilement des pixels destinés à être lus ultérieurement. Cette configuration permet également d'avoir un temps d'intégration uniforme pour tous les pixels de la matrice.

Dans ce cas, une des deux extrémités de chaque deuxième portion de matériau électriquement conducteur peuvent être reliées électriquement entre elles. Les extrémités reliées entre elles peuvent être reliées à la masse.

Chaque deuxième portion de matériau électriquement conducteur peut comporter, au niveau de chacune des électrodes formées par ladite deuxième portion de matériau électriquement conducteur, des parties dont la résistance électrique est supérieure à celle du reste de ladite deuxième portion de matériau électriquement conducteur. Une telle configuration permet de concentrer le chauffage au niveau des capacités pyroélectriques et de réduire une déperdition de chaleur entre les capacités pyroélectriques.

La différence de résistance électrique peut être obtenue grâce à des parties de dimensions inférieures, par exemple largeur et/ou épaisseur, par rapport au reste de la portion de matériau conducteur.

Le capteur comporte en outre des moyens d'application de la tension de chauffage aux extrémités de la ou des deuxièmes portions de matériau électriquement conducteur tels que, lors d'une mesure du motif thermique par l'un des pixels, la valeur du potentiel électrique sur l'électrode formant l'élément chauffant dudit pixel soit sensiblement constante tout au long de la mesure.

Les pixels peuvent être disposés en formant une matrice de plusieurs lignes et plusieurs colonnes de pixels. Chaque pixel peut comporter au moins un transistor de sélection de ligne apte à recevoir sur sa grille un signal de commande commun à toute la ligne de pixels à laquelle appartient ledit pixel et, lorsque le transistor de sélection de ligne est à l'état passant, à relier électriquement l'électrode de lecture dudit pixel à un circuit de lecture comprenant au moins un amplificateur et commun aux pixels de la colonne à laquelle appartient ledit pixel.

Dans une première configuration, le transistor de sélection de ligne peut être relié à une entrée inverseuse de l'amplificateur, et le circuit de lecture peut comporter en outre :

- des moyens d'application d'une tension de référence sur une entrée non inverseuse de l'amplificateur,
- un interrupteur, ou commutateur, reliant l'entrée inverseuse de l'amplificateur à la sortie de l'amplificateur,
- une capacité, par exemple un condensateur, reliant l'entrée inverseuse de l'amplificateur à la sortie de l'amplificateur.

Dans cette première configuration, le circuit de lecture réalise une lecture d'un courant, c'est-à-dire une lecture directe des charges électriques générées par les capacités pyroélectriques.

Dans ce cas, le capteur peut comporter en outre un circuit de commande apte à mettre en oeuvre, pour la lecture d'une ligne de pixels, au moins les étapes suivantes :

- mise à l'état passant des transistors de sélection de ligne des pixels de ladite ligne et fermeture des interrupteurs des circuits de lecture,
- application de la tension de chauffage aux extrémités de la deuxième portion de matériau électriquement conducteur ou d'une des deuxièmes portions de matériau électriquement conducteur associée à ladite ligne de pixels,
- ouverture des interrupteurs des circuits de lecture,
- attente d'un temps d'intégration correspondant à la mesure du motif thermique par les pixels de ladite ligne,
- lecture d'une tension de sortie de l'amplificateur.

La première étape de mise à l'état passant des transistors de sélection de ligne et de fermeture des interrupteurs des circuits de lecture permet de fixer les potentiels des noeuds actifs des pixels de la ligne lue à une valeur initiale connue correspondant à la valeur de la tension de référence appliquée sur les entrées non inverseuses des amplificateurs des circuits de lecture.

Lorsque le temps de chauffe des pixels d'une ligne lue est supérieur au temps d'intégration par ces pixels, le procédé de lecture peut comporter, entre le début du chauffage des pixels et le début de la mesure du motif thermique, une mise à l'état bloqué des transistors de sélection de ligne des pixels de ladite ligne, puis, après l'ouverture des interrupteurs des circuits de lecture, une mise à l'état passant des transistors de sélection de ligne des pixels de ladite ligne.

Dans cette configuration, le circuit de commande peut arrêter l'application de la tension de chauffage aux extrémités de la deuxième portion de matériau électriquement conducteur de cette ligne de pixels après la lecture des pixels de cette ligne.

Dans une deuxième configuration, chaque pixel peut comporter en outre :

- un transistor de réinitialisation apte à appliquer une tension de réinitialisation sur l'électrode de lecture du pixel,
- un transistor suiveur de tension dont une grille est reliée à l'électrode de lecture du pixel et dont l'une des électrodes de source et de drain est reliée au transistor de sélection de ligne.

Dans cette deuxième configuration, le circuit de lecture réalise une lecture en tension de la mesure réalisée du fait que le transistor suiveur de tension réalise une copie de la tension de l'électrode de lecture qui est ensuite lue par l'amplificateur.

Dans ce cas, le capteur peut comporter en outre un circuit de commande apte à mettre en oeuvre, pour la lecture d'une ligne de pixels, au moins les étapes suivantes :

- mise à l'état passant des transistors de réinitialisation des pixels de ladite ligne,
- mise à l'état bloqué des transistors de sélection de ligne des pixels de ladite ligne,
- application de la tension de chauffage aux extrémités de la deuxième portion de matériau électriquement conducteur ou d'une des deuxièmes portions de matériau électriquement conducteur associée à ladite ligne de pixels,
- mise à l'état bloqué des transistors de réinitialisation des pixels de ladite ligne,
- attente d'un temps d'intégration correspondant à la mesure du motif thermique par les pixels de ladite ligne,
- mise à l'état passant des transistors de sélection de ligne des pixels de ladite ligne,
- lecture des tensions appliquées sur les entrées des amplificateurs des circuits de lecture.

Au début de la mise en oeuvre des étapes ci-dessus, les transistors de réinitialisation sont à l'état passant pour que les tensions de réinitialisation soient appliquées sur les électrodes de lecture des pixels lus.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- la figure 1 représente une vue de dessus d'une partie d'un capteur de motif thermique selon l'art antérieur,
- la figure 2 représente une vue en coupe d'une capacité pyroélectrique d'un pixel d'un capteur de motif thermique, objet de la présente invention,
- la figure 3 représente une vue de dessus d'une partie d'un capteur de motif thermique, objet de la présente invention, selon un premier mode de réalisation,
- la figure 4 représente une vue de dessus d'une partie d'un capteur de motif thermique, objet de la présente invention, selon un deuxième mode de réalisation,
- la figure 5 représente une vue de dessus d'une partie d'un capteur de motif thermique, objet de la présente invention, selon une variante du deuxième mode de réalisation,
- les figures 6 et 7 représentent des premier et deuxième exemples de réalisation de circuits de lecture des pixels d'un capteur de motif thermique, objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

On se réfère tout d'abord à la figure 2 qui représente une vue en coupe d'une capacité pyroélectrique d'un pixel 102, qui forme l'élément de détection thermique du pixel 102, d'un capteur 100 de motif thermique.

Le capteur 100 comporte un substrat 104 correspondant par exemple à un substrat de verre ou un substrat de semi-conducteur (par exemple du silicium). Un substrat 104 en verre peut être utilisé lorsque le capteur 100 est réalisé avec des transistors TFT, tandis qu'un substrat 104 en semi-conducteur, par exemple en silicium, peut être utilisé lorsque le capteur 100 comporte des transistors réalisés en technologie MOS. Le substrat 104 peut également être un substrat souple, par exemple à base de polyimide ou de PEN (polyéthylène naphtalate) ou de PET (polyéthylène téréphtalate), sur lequel les éléments électroniques du capteur 100 sont réalisés par technologie électronique imprimée (par exemples via une réalisation avec des têtes d'écriture de type jet d'encre) ou par lithographie.

Les pixels 102 du capteur 100 sont disposés en formant une matrice de plusieurs lignes et plusieurs colonnes de pixels 102. Le pas des pixels 102, dans le plan (X,Y) (c'est-à-dire le plan du substrat 104), est par exemple compris entre environ 25 $\mu$m et 100 $\mu$m. Dans le cas d'un capteur 100 de résolution égale à 500 dpi (« dot per inch »), le pas des pixels 102 est égal à 50,8 $\mu$m.

Chacun des pixels 102 du capteur 100 comporte des moyens de mesure, ou de détection, thermique formés par une capacité pyroélectrique. Chaque capacité pyroélectrique comporte une portion 106 de matériau pyroélectrique disposée entre une électrode inférieure 108 et une électrode supérieure 110. Le matériau pyroélectrique de la portion 106 est avantageusement du P(VDF-TrFE) ou du PVDF. En variante, le matériau pyroélectrique de la portion 106 peut être de l'AIN ou du PZT, ou tout autre matériau pyroélectrique adapté pour former une capacité pyroélectrique. L'épaisseur de la portion 106 est par exemple comprise entre environ 500 nm et 10 $\mu$m.

Les électrodes 108, 110 comportent chacune au moins un matériau électriquement conducteur, par exemple un matériau métallique tel que du titane d'épaisseur égale à environ 0,2 $\mu$m, et/ou du molybdène et/ou de l'aluminium et/ou un oxyde conducteur tel que de l'ITO (oxyde d'indium et d'étain) et/ou un polymère conducteur. L'une des électrodes 108, 110, avantageusement l'électrode supérieure 110, ou chacune des deux électrodes 108, 110, peut être formée par un empilement de plusieurs matériaux électriquement conducteurs, par exemple un empilement Ti/TiN/AICu. L'épaisseur de chacune des électrodes 108, 110 est par exemple comprise entre environ 0,1 $\mu$m et 1 $\mu$m.

Une couche de protection 109, correspondant par exemple à une couche de nitrure d'aluminium ou de tout autre matériau adapté à la réalisation de cette couche, recouvre l'électrode supérieure 110. L'épaisseur de la couche de protection 109 peut être comprise entre quelques microns et environ 100 $\mu$m. Une face supérieure 113 de la couche de protection 109 correspond à la surface au-dessus de laquelle se trouve le motif thermique destiné à être détecté, par exemple un doigt dont l'empreinte est destinée à être détectée.

Pour que le PVDF de la portion 106 acquière ses propriétés pyroélectriques (et aussi piézoélectriques), ce matériau est soumis, une fois pour toute la durée de vie de la capacité pyroélectrique, à un champ électrique d'environ 100 volts par micron d'épaisseur de PVDF. Les molécules à l'intérieur du PVDF s'orientent, et restent orientées ainsi, même lorsque le PVDF n'est plus soumis à ce champ électrique. Le PVDF peut être ainsi polarisé en appliquant une tension de polarisation initiale aux bornes des électrodes 108, 110.

Après cette polarisation initiale, lorsque la portion 106 est soumise à une variation de température $\Delta$T, cette variation de température $\Delta$T provoque l'apparition d'un champ électrique supplémentaire générant des charges $\Delta$Q entre les électrodes 108, 110 telles que :

$$\Delta Q = S.\gamma.\Delta T \ .$$

Le paramètre S correspond à la surface de la portion 106 en regard avec chacune des électrodes 108, 110. Le paramètre γ correspond au coefficient pyroélectrique du matériau pyroélectrique de la portion 106. Par exemple, le coefficient pyroélectrique γ du PVFD est égal à environ 32 μC/m²/K.

La portion 106 et les électrodes 108, 110 formant une capacité de valeur C à laquelle s'ajoutent des capacités parasites Cp, les charges ΔQ générées induisent une différence de potentiels électriques ΔV entre les électrodes 108, 110 telle que :

$$\left(C + C_p\right)\Delta V = \Delta Q = S.\gamma.\Delta T \ .$$

En plus des charges générées par la capacité de valeur C, d'autres charges sont également générées via les capacités parasites Cp présentes, par exemple celles liées à la grille du transistor de lecture dans le cas d'un circuit de lecture en tension.

Lorsque le potentiel sur l'électrode de lecture (formée par l'une des électrodes 108, 110) est fixe (lecture dite « en courant »), les charges générées s'écoulent vers le circuit de lecture en formant un courant intégré en sortie, avec dans ce cas :

$$\frac{\Delta Q}{\zeta} = \frac{S.\gamma.\Delta T}{\zeta} \ .$$

avec ζ correspondant au temps d'intégration pendant lequel la mesure est réalisée par le pixel. Une telle lecture en courant a pour avantage d'être insensible, au premier ordre, à la valeur des capacités, en particulier des capacités parasites.

Le signe de la tension électrique ΔV obtenue entre les électrodes 108, 110, ou le sens du courant dans le cas d'une lecture en courant, dépend du sens du champ électrique avec lequel le PVDF de la portion 106 a été initialement polarisé. Dans le cas de certains autres matériaux pyroélectriques tels que le nitrure d'aluminium, ce sens de polarisation initiale dépend de la manière avec laquelle le matériau pyroélectrique a été déposé, de son ordre et de son orientation cristallographique. En outre, la tension électrique ΔV obtenue, ou le sens du courant, peut être positive ou négative suivant que la variation de température subie par la capacité pyroélectrique soit positive ou négative.

Le capteur 100 comporte également des éléments chauffants dissipant une certaine quantité de chaleur dans les pixels 102, et notamment dans la portion 106 de matériau pyroélectrique. Contrairement aux capteurs pyroélectriques de l'art antérieur, ces éléments chauffants ne sont pas des éléments rapportés à côté ou au-dessus ou en-dessous des capacités pyroélectriques, mais sont formés directement par l'une des électrodes 108, 110 de chacune des capacités pyroélectriques. Sur l'exemple de la figure 2, l'élément chauffant de la capacité pyroélectrique du pixel 102 est formé par l'électrode supérieure 110. L'autre électrode de la capacité pyroélectrique, ici l'électrode inférieure 108, sert d'électrode de lecture du pixel 102.

Le chauffage de la portion 106 de matériau pyroélectrique est obtenu en faisant circuler un courant dans l'électrode destinée à former l'élément chauffant. Or, cette électrode sert également à la polarisation de la capacité pyroélectrique. Ainsi, la résistance de chauffage de chacun des pixels 102 sert donc également à la polarisation d'une électrode de la capacité pyroélectrique formée par la portion 106 et les électrodes 108, 110 de chacun des pixels 102 lors de la mesure réalisée par ces pixels 102 (la polarisation appliquée lors d'une mesure est différente de la polarisation initiale du PVDF précédemment décrite).

L'utilisation de l'une des électrodes 108, 110 des pixels 102 pour former les éléments chauffants est possible du fait que la valeur du potentiel électrique appliqué sur cette électrode lors d'une lecture du motif thermique est constante.

La figure 3 représente une vue de dessus de plusieurs pixels 102 du capteur 100 selon un premier mode de réalisation.

Les électrodes inférieures 108, qui correspondent aux électrodes de lecture des pixels sur lesquelles les charges générées par les capacités pyroélectriques seront récupérées pour être lues, sont formées par des premières portions de matériau électriquement conducteur distinctes et isolées électriquement les unes des autres. Ces premières portions conductrices ont chacune une section rectangulaire dans le plan du substrat 104 (plan (X,Y)), et sont disposées les unes à côté des autres sous la forme d'une matrice afin de former les matrice de pixels 102. Le matériau pyroélectrique est réalisé sous la forme d'une seule portion 106 recouvrant toutes les électrodes inférieures 108. Les électrodes supérieures 110 des pixels sont formées par une deuxième portion de matériau électriquement conducteur 111 commune à tous les pixels 102 et formant les éléments chauffants des pixels 102. Les électrodes supérieures 110 des pixels 102 sont donc reliées électriquement entre elles. La deuxième portion de matériau électriquement conducteur 111 est composée de plusieurs parties 112 s'étendant parallèlement les unes et autres et recouvrant chacune les parties de la portion 106 formant les capacités pyroélectriques d'une même colonne de la matrice de pixels 102. D'autres parties 114 de la deuxième portion de matériau électriquement conducteur 111 relient en série les parties 112 et s'étendent perpendiculairement à ces parties 112. La deuxième portion de matériau électriquement conducteur 111 formant les électrodes supérieures 110 des pixels 102 a ici une forme de « serpentin ».

La deuxième portion de matériau électriquement conducteur 111 comporte également deux extrémités 116, 118 sur lesquelles une tension de chauffage est destinée à être appliquée. L'une des deux extrémités 116, 118 est par exemple reliée à la masse, et un potentiel de chauffage non nul est appliqué sur l'autre extrémité par des moyens de chauffage par exemple formés par une liaison électrique appliquant une tension existante dans le capteur sur l'extrémité 116. Par exemple, si l'extrémité 118 est reliée à la masse et qu'un potentiel de chauffage $V_{chauffe}$ est appliqué sur l'extrémité 116, un courant s'écoule alors depuis l'extrémité 116 jusqu'à l'extrémité 118 de la deuxième portion 111, provoquant un échauffement par effet Joule dans la deuxième portion 111, et échauffant ainsi la portion 106 des pixels 102. La valeur de la tension de chauffage est choisie en fonction de la puissance de chauffage désirée, cette puissance étant fonction notamment de l'épaisseur de la portion 106 destinée à être chauffée ainsi que de l'épaisseur de la couche de protection 109, du coefficient pyroélectrique du matériau de la portions 106, de la sensibilité du circuit de lecture, du niveau de bruit du circuit de lecture et du temps d'intégration. Dans un pixel 102, la puissance de chauffage est par exemple comprise entre environ 0,1 mW et 10 mW.

Avantageusement, pour tous les modes de réalisation de l'invention, la deuxième portion de matériau conducteur 111 servant de résistance de chauffage des pixels 102 forme également l'électrode supérieure 110 des pixels 102 qui est disposée au-dessus du matériau pyroélectrique et non l'électrode inférieure 108 car cette disposition permet de relier à la masse du capteur 100 les portions conductrices des capacités pyroélectriques qui sont le plus proche de l'extérieur du capteur 100. Une telle disposition forme une protection vis-à-vis des décharges électrostatiques (ESD) car si une telle décharge intervient, il existe alors un chemin préférentiel pour écouler les charges électriques dues à cette décharge, ce qui limite les claquages de tension avec des éléments actifs fragiles du capteur 100 tels que les transistors.

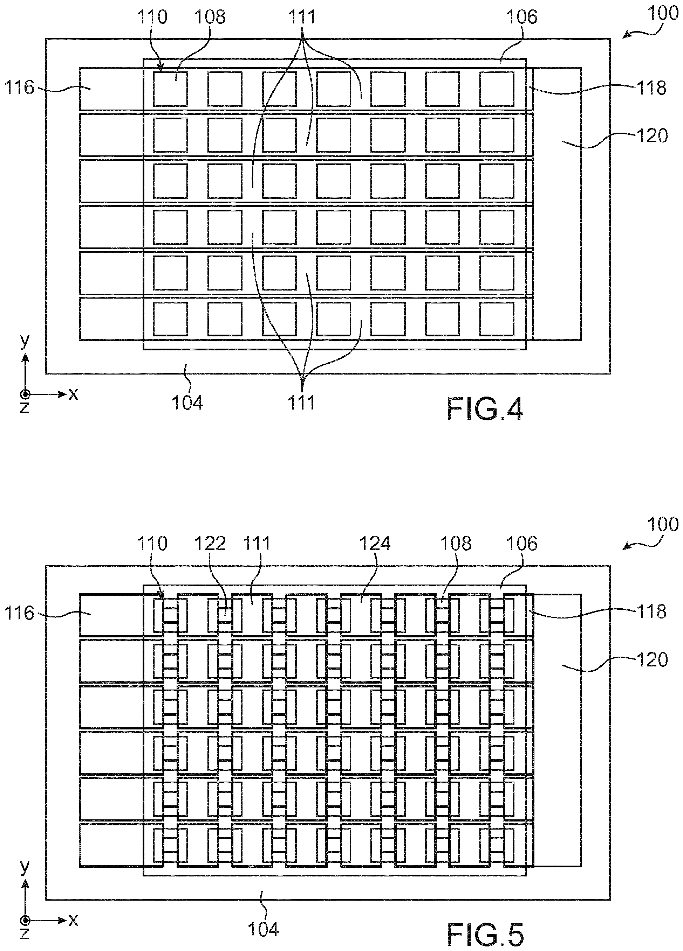

Il est également proposé un capteur 100 selon un deuxième mode de réalisation, représenté sur la figure 4. Dans ce deuxième mode de réalisation, le capteur 100 comporte plusieurs deuxièmes portions de matériau conducteur 111 formant chacune les électrodes supérieures 110 des pixels 102 disposés sur une même ligne. Six deuxièmes portions de matériau conducteur 111 sont représentées sur la figure 4. Chacune des deuxièmes portions 111 comporte une première extrémité 116 sur laquelle est appliqué un potentiel de chauffage, et une deuxième extrémité 118 reliée à une autre portion conductrice 120 commune à toutes les deuxièmes portions 111 et reliée à la masse. Les potentiels électriques appliqués sur les premières extrémités 116 des deuxièmes portions 111 sont similaires d'une portion 111 à l'autre.

Par rapport au premier mode de réalisation, ce deuxième mode de réalisation permet de chauffer et polariser chaque ligne de pixels 102 indépendamment les unes des autres, ce qui simplifie la lecture des pixels 102.

Cela réduit notamment le risque de non-uniformité de lecture des pixels 102 qui serait dû à un délai de lecture des pixels 102. La puissance nécessaire au chauffage des pixels 102 est également réduite car les pixels 102 ne sont pas tous chauffés simultanément.

Les valeurs des tensions de chauffage appliquées sur les deuxièmes portions 111 sont ajustées par rapport à la résistivité du métal des deuxièmes portions 111 afin de produire l'énergie thermique désirée dans les pixels 102. Par exemple, il est considéré un capteur 100 comportant une matrice de 400 x 300 pixels à 500 dpi (ce qui correspond à des pixels 102 disposés les uns à côté des autres avec un pas de 50,8 μm). Pour un tel capteur 100, lorsque les deuxièmes portions 111 comportent du titane, ont chacune une épaisseur égale à environ 200 nm et présentent une résistivité de l'ordre de 2 Ohm par carré, chacune des deuxièmes portions 111 formant les électrodes supérieures 110 d'une ligne de 400 pixels ayant chacun une largeur (dimension selon l'axe Y de la figure 4, c'est-à-dire la dimension se trouvant dans le plan dans lequel s'étend la surface principale de la deuxième portion 111 et qui est perpendiculaire à la dimension principale, c'est-à-dire la longueur, de la deuxième portion 111) égale à environ 40 μm a une résistivité égale à 400 x 50/40 = 500 carrés, soit 1 kOhm. Pour obtenir une puissance dissipée par pixel 102 égale à environ 0,1 mW, soit environ 40 mW pour chaque ligne de pixels 102, un potentiel électrique d'environ 6,3 V est appliqué sur chacune des extrémités 116 des deuxièmes portions 111. Pour obtenir environ 1 mW de puissance dissipée par pixel, un potentiel électrique d'environ 20 V est appliqué sur chacune des extrémités 116 des deuxièmes portions 111.

Dans le deuxième mode de réalisation représenté sur la figure 4, les deuxièmes portions 111 forment des bandes conductrices de largeur uniforme s'étendant le long d'une ligne de pixels 102. La chaleur est ainsi diffusée de manière uniforme le long de chaque bande conductrice. Selon une variante de réalisation représentée sur la figure 5, la largeur de chacune des deuxièmes portions 111 n'est pas uniforme sur toute sa longueur. Des parties 122 de chaque deuxième portion 111 localisées en regard des électrodes inférieures 108, c'est-à-dire centrées sur chaque pixel 102, ont une largeur inférieure à celle d'autres parties 124 disposées à cheval au-dessus de deux pixels et chacune reliant deux parties 122. Cette variante de réalisation permet de concentrer le chauffage réalisé sur chaque pixel 102 et limiter les déperditions de chaleur entre les pixels 102 du fait que la résistance électrique augmente à la jonction entre une partie 122 et une partie 124 adjacentes (ces jonctions étant localisées sur les pixels 102 et non entre les pixels 102), ce qui provoque un effet Joule plus important et une injection de chaleur plus importante au niveau de ces jonctions. Le fait d'avoir des points chauds centrés sur les pixels 102 réduit également les problèmes de diathermie, c'est-à-dire le transfert latéral de chaleur entre des pixels voisins. Cette variante entraîne toutefois une légère réduction des charges pyroélectriques générées du fait de la réduction de surface du matériau pyroélectrique en regard des deuxièmes portions 111, ce qui signifie qu'un compromis doit être trouvé entre les différents paramètres thermiques, les vitesses de lecture, etc.

Ces points chauds centrés sur les pixels 102 peuvent être réalisés non pas en réduisant la largeur de chacune des deuxièmes portions 111 au niveau des pixels 102, mais en réduisant l'épaisseur de matériau conducteur des deuxièmes portions 111 au niveau des pixels 102.

En variante des modes de réalisation précédemment décrits, les portions conductrices servant à la fois à la polarisation des capacités pyroélectriques et au chauffage du matériau pyroélectrique des pixels 102 peuvent correspondre non pas à celles formant les électrodes supérieures 110 des pixels 102 mais celles formant les électrodes inférieures 108 des pixels 102. De plus, des formes, ou designs, de la ou des portions conductrices qui forment à la fois l'une des électrodes de la capacité pyroélectrique de chaque pixel 102 et les éléments de chauffage de ces pixels 102 autres que celles précédemment décrites peuvent être envisagées.

Outre les capacités pyroélectriques des pixels 102, le capteur 100 comporte également des éléments électroniques permettant de lire les charges électriques générées par les capacités pyroélectriques et donc lire le motif thermique détecté par le capteur 100.

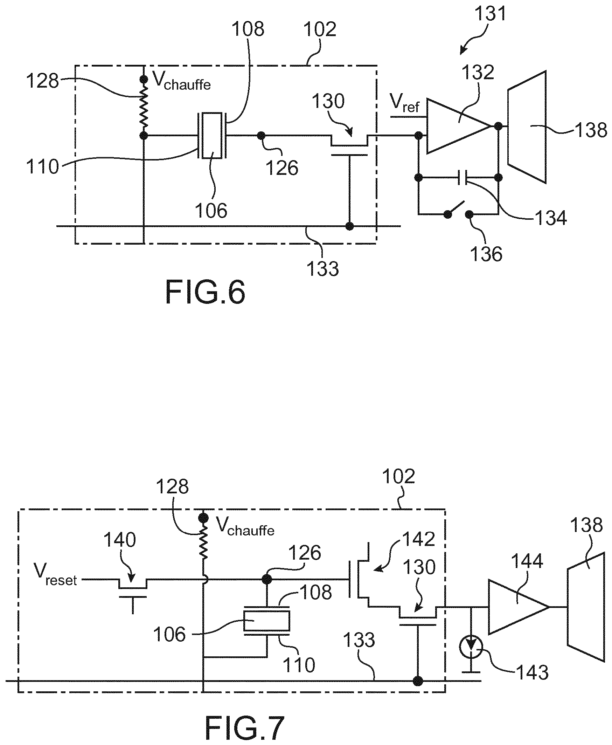

La figure 6 représente un premier exemple de réalisation de ces éléments électroniques permettant de lire la variation de charges électriques apparaissant dans la capacité pyroélectrique de l'un des pixels 102 du capteur 100.

Le pixel 102 représenté sur la figure 6 comporte une capacité pyroélectrique formée par une portion 106 de matériau pyroélectrique disposée entre deux électrodes 108, 110. Un potentiel de chauffage $V_{chauffe}$ permettant de chauffer la portion 106 de matériau pyroélectrique est appliqué sur l'une des deux électrodes de la capacité pyroélectrique, par exemple l'électrode supérieure 110 comme dans les modes de réalisation précédemment décrits. Le matériau électriquement conducteur sur lequel est appliqué le potentiel de chauffage $V_{chauffe}$ forme un élément résistif de chauffage symbolisé par une résistance de chauffage 128. L'autre électrode (l'électrode inférieure 108 dans l'exemple décrit ici) forme une électrode de lecture du pixel 102 et est reliée à un noeud actif 126 du pixel 102.

Chaque pixel 102 comporte un transistor 130 de sélection de ligne. La grille du transistor 130 est reliée à une liaison électrique 133 commune à tous les transistors 130 d'une même ligne et sur laquelle un signal de sélection est à destiné à être appliqué. Une première des électrodes de source et de drain du transistor 130 est reliée au noeud actif 126 et une deuxième des électrodes de source et de drain du transistor 130 est reliée à une entrée d'un circuit de lecture 131 se trouvant en pied de colonne. Cette entrée du circuit de lecture 131 correspond à l'entrée inverseuse d'un amplificateur de lecture 132 correspondant par exemple à un amplificateur opérationnel. Un potentiel électrique de polarisation $V_{ref}$ est appliqué sur l'entrée non inverseuse de l'amplificateur 132. La sortie de l'amplificateur 132 est rebouclée sur son entrée inverseuse par l'intermédiaire d'une capacité 134. Un interrupteur, ou commutateur, 136 est relié en parallèle à la capacité 134 et permet de court-circuiter la capacité 134. La sortie de l'amplificateur de lecture 132 est également reliée à l'entrée d'un convertisseur analogique/numérique 138. L'amplificateur de lecture 132, la capacité 134, l'interrupteur 136 et le convertisseur analogique/numérique 138 sont communs à tous les pixels 102 d'une même colonne. Le convertisseur analogique/numérique 138 peut être commun à tous les pixels 102 du capteur 100, moyennant l'ajout d'éléments électroniques de multiplexage entre les sorties des amplificateurs de lecture 132 et le convertisseur analogique/numérique 138.

Lors d'une mesure d'une variation de température du pixel 102, le pixel 102 est tout d'abord réinitialisé en fermant l'interrupteur 136 (si celui-ci était précédemment en position ouverte) et en mettant à l'état passant le transistor 130. Le potentiel $V_{ref}$ se retrouve alors appliqué sur le noeud 126. La tension de chauffage est appliquée aux extrémités de la deuxième portion 111 de la capacité pyroélectrique du pixel 102. La capacité pyroélectrique se trouve à ce moment à une température $T_0$. L'interrupteur 136 est ensuite ouvert. L'intégration débute alors au niveau de la capacité pyroélectrique du pixel 102, pendant un temps d'intégration $\zeta$ par exemple égal à environ 30 µs. Des charges électriques sont générées par la capacité pyroélectrique du pixel 102 pendant ce temps d'intégration $\zeta$. Du fait que l'interrupteur 136 est ouvert et que le transistor 130 est passant, les charges électriques générées par la capacité pyroélectrique du pixel 102 s'écoulent vers la capacité 134 associée au pixel 102. A l'issu de ce temps d'intégration $\zeta$, la capacité pyroélectrique se trouve à la température $T_1$ et a donc été soumise à une variation de température $\Delta T = T_1 - T_0$, les charges électriques générées par la capacité pyroélectrique et stockées dans la capacité 134 étant la conséquence de cette variation de température. Le potentiel électrique en sortie de l'amplificateur 132 est donc $V_{out} = Q.C_{ref} + V_{ref}$, avec Q correspondant aux charges électriques générées et $C_{ref}$ la valeur de la capacité 134. Ce potentiel est alors lu et échantillonné par le convertisseur analogique/numérique 138. Lorsque l'opération de lecture et d'échantillonnage du résultat est achevée, l'interrupteur 136 est commuté en position fermée pour décharger la capacité 134 et le transistor 130 est mis à l'état bloqué pour isoler le pixel 106 et permettre la lecture d'un autre pixel de la colonne. Cette opération de lecture est mise en oeuvre simultanément pour tous les pixels 102 d'une même ligne.

Lors d'une telle lecture, le potentiel électrique $V_{chauffe}$ appliqué sur l'une des électrodes de la capacité pyroélectrique est constant tout au long de la lecture d'un pixel. Par contre, du fait que la deuxième portion de matériau conducteur 111 sur laquelle est appliqué ce potentiel est commune à plusieurs pixels 102, la valeur du potentiel de chauffage appliqué sur l'une des électrodes des capacités pyroélectriques chacun de ces pixels 102 est différente d'un pixel à l'autre. En considérant par exemple le deuxième mode de réalisation représenté sur la figure 4, l'électrode supérieure 110 de la capacité pyroélectrique la plus proche de l'extrémité 116 est soumise à un potentiel sensiblement égal à $V_{chauffe}$. L'électrode supérieure 110 de la capacité pyroélectrique suivante est soumise à un potentiel électrique sensiblement égal à $V_{chauffe} - \delta V$. Les valeurs des potentiels électriques appliqués sur les électrodes supérieures 110 des capacités pyroélectriques diminuent proportionnellement à leur éloignement vis-à-vis de l'extrémité 116. Lorsque la portion conductrice 120 est reliée à la masse, l'électrode supérieure 110 de la dernière capacité pyroélectrique, correspondant à celle qui est voisine de la portion conductrice 120, est soumise à un potentiel électrique sensiblement égal à 0V, c'est-à-dire le potentiel électrique de la masse. Cette variation du potentiel électrique de chauffage appliqué d'un pixel à l'autre ne modifie pas le chauffage réalisé d'un pixel à l'autre du fait que l'écoulement du courant dans la deuxième portion conductrice 111 provoquant l'échauffement est le même dans toute la deuxième portion conductrice 111 et le même pour tous les pixels 102 car les résistances de chauffage 128 de tous les pixels 102 sont identiques.

A la lecture des pixels, les valeurs des potentiels sur chaque électrode sont différentes d'un pixel à l'autre. Par contre, pour une même variation de température, la tension aux bornes des capacités pyroélectriques est identique. Or, ce sont les charges excédentaires générées par rapport à la tension de référence qui sont lues, qu'elles soient positives ou négatives. Par exemple, dans le cas du premier exemple de réalisation représenté sur la figure 6, la tension de lecture résultante obtenue en sortie de l'amplificateur 132 est $V_{out} = V_{ref} \pm \Delta Q/Cf$, avec Cf correspondant à la valeur de la capacité 134, qui est indépendante de la tension aux bornes des capacités pyroélectriques lorsque le potentiel $V_{chauffe}$ est stable durant le temps d'intégration.

Dans le premier exemple de réalisation précédemment décrit en liaison avec la figure 6, les charges électriques générées sont lues directement par l'amplificateur 132. Du fait que les éléments électroniques de lecture dans chaque pixel 102 ne correspondent qu'à un seul transistor 130, ce premier exemple de réalisation est bien adapté pour une réalisation du transistor 130 en technologie TFT amorphe, dont le coût de réalisation est faible. De plus, dans ce premier exemple de réalisation, le temps de lecture par l'amplificateur 132 est court, par exemple compris entre environ 1 et 10 μs, voire nul si le pixel 102 est connecté à l'amplificateur 132 pendant l'intégration comme c'est le cas dans l'exemple décrit précédemment. Enfin, en technologie TFT, le circuit comportant les pixels 102 est distinct de celui comportant les éléments 132, 134, 136 et 138, ces circuits étant assemblés ensuite par report l'un sur l'autre ou par d'autres solutions (« Chip on Flex », fils, etc.).

La figure 7 représente un deuxième exemple de réalisation des éléments électroniques permettant de lire en tension les mesures des pixels 102 du capteur 100.

Comme dans le premier exemple de réalisation, chaque pixel 102 comporte la capacité pyroélectrique reliée au noeud actif 126. Chaque pixel 102 est également pourvu d'un transistor de réinitialisation 140 dont l'une des électrodes de source et de drain est reliée au noeud 126 et dont l'autre des électrodes de source et de drain est soumise à l'application d'une tension de réinitialisation $V_{reset}$. Un signal de commande de réinitialisation du pixel 102 est appliqué sur la grille du transistor de réinitialisation 140. Cette réinitialisation permet de mettre le potentiel électrique du noeud 126 à une valeur connue (ici $V_{reset}$) au début de l'intégration, ainsi que de vider les charges de la capacité pyroélectrique une fois la lecture terminée. Comme pour la commande du transistor 130 de sélection de ligne de pixels, la commande du transistor de réinitialisation 140 peut être commune à toute une ligne de pixels 102.

Contrairement au premier exemple de réalisation dans lequel le noeud 126 est directement relié à une première des électrodes de source et de drain du transistor 130, le noeud 126 est ici relié à une grille d'un autre transistor 142 formant un suiveur de tension et réalisant une amplification du signal lu, c'est-à-dire du potentiel de l'électrode de lecture 108, évoluant avec les charges électriques générées par la capacité pyroélectrique du pixel 102. Un potentiel électrique d'alimentation est appliqué sur une première des électrodes de source et de drain du transistor 142 et une deuxième des électrodes de source et de drain du transistor 142 est reliée à la première des électrodes de source et de drain du transistor 130. Une deuxième des électrodes de source et de drain du transistor 130 est reliée à l'entrée du circuit de lecture 131 formé d'un amplificateur 144, inverseur ou non, de gain G. La sortie de l'amplificateur 144 est reliée à l'entrée du convertisseur analogique/numérique 138. Une source de courant 143 est également couplée à l'entrée de l'amplificateur 144 afin de polariser rapidement le transistor 142 dans une zone de fonctionnement où il se comporte en suiveur de tension.

Dans ce deuxième exemple de réalisation, la lecture d'un pixel 102 est réalisée par l'intermédiaire de trois transistors, par exemple de type MOS. La lecture se fait en tension et bénéficie de l'amplification locale réalisée par le transistor suiveur 142 qui bloque l'écoulement des charges sur le noeud actif 126. Les transistors peuvent être réalisés à partir de polysilicium ou d'IGZO.

Ce deuxième exemple de réalisation réalise une lecture non destructive des charges générées par les capacités pyroélectriques. En effet, tant que le noeud actif 126 n'a pas subi de réinitialisation, les charges électriques générées sont conservées.

Dans le cas du deuxième exemple de réalisation représenté sur la figure 7, la tension de lecture résultante obtenue en sortie de l'amplificateur 144 dépend de la valeur de la capacité pyroélectrique additionnée des capacités parasites présentes sur le noeud actif 126, et est égale à $G(V_{reset} \pm \Delta Q/C_{pyro})$. Dans ce deuxième exemple de réalisation, il est possible de chauffer les portions 106 de matériau pyroélectrique en appliquant une différence de potentiels allant de $V_{chauffe}$ à la masse entre les extrémités 116 et 118 de chacune des deuxièmes portions de matériau conducteur 111.

Lorsque les éléments électroniques de lecture correspondent à ceux du deuxième exemple de réalisation précédemment décrit, la lecture d'un des pixels 102 du dispositif 100 peut être réalisée en mettant en oeuvre les étapes suivantes :

- réinitialisation de la capacité pyroélectrique via la mise à l'état passant du transistor de réinitialisation 140,
- mise à l'état bloqué du transistor 130 de sélection de ligne de pixels,
- allumage du chauffage de la portion de matériau pyroélectrique 106 du pixel 102 via l'application du potentiel $V_{chauffe}$ sur l'une des électrodes de la capacité pyroélectrique associée au pixel 102 destiné à être lu,
- mise à l'état bloqué du transistor de réinitialisation 140,
- début d'intégration du pixel 102 qui est alors à la température $T_0$,
- attente du temps d'intégration $\zeta$, par exemple égal à 30 $\mu$s,
- lecture du pixel 102, correspondant à la mise à l'état passant du transistor 130 qui permet de recopier la tension reçue sur la grille du transistor suiveur 142 vers l'amplificateur 144 et d'échantillonner la valeur obtenue après cette conversion, correspondant à la variation de température $\Delta T = T_1 - T_0$,
- extinction du chauffage de la portion de matériau pyroélectrique 106.

De manière générale, le temps d'intégration $\zeta$ sera compris entre environ 30 $\mu$s et 1ms afin d'obtenir une variation de température comprise entre environ 0,5 K et 2 K.

En outre, que la lecture soit réalisée en charges (ou en courant) ou en tension, l'allumage et l'extinction du chauffage ne sont pas réalisés pendant le temps d'intégration $\zeta$ et la lecture. En effet, l'allumage du chauffage fait varier de manière importante le potentiel d'une des électrodes des capacités pyroélectriques. Cette variation se retrouve donc sur l'autre électrode des capacités pyroélectriques. Cette variation de potentiel est, pour certains pixels, largement supérieure au signal destiné à être lu par ces pixels. Pour la même raison, il convient de limiter au maximum tous les parasites sur le potentiel $V_{chauffe}$ pendant le temps d'intégration, en particulier ceux liés aux appels de courant provenant du fonctionnement d'autres parties électroniques.

Quel que soit le mode de réalisation des éléments électroniques de lecture du capteur 100, les pixels 102 sont avantageusement lus ligne par ligne.

Bien que non représenté, le capteur 100 comporte un circuit de commande permettant d'appliquer les signaux de commande décrits ci-dessus pour piloter la lecture des pixels 102.

Le motif thermique détecté par le capteur 100 correspond avantageusement à une empreinte digitale.

Bien que non représenté, le capteur 100 peut comporter en outre un circuit électronique de traitement apte à construire une image globale du motif thermique à partir des mesures réalisées au niveau de chacun des pixels 102. Ce circuit électronique de traitement peut également être apte à comparer cette image à plusieurs images stockées dans une base de données afin d'identifier si le motif thermique détecté correspond à l'un de ceux stockés dans la base de données. Le circuit électronique de traitement peut également être apte à afficher une image du motif thermique détecté.

En outre, le capteur 100 comporte avantageusement, en plus des éléments de détection thermique précédemment décrits, des éléments de détection optique ou capacitive permettant de détecter une image de l'élément dont le motif thermique est également détecté. Ainsi, le capteur 100 peut comporter une matrice de pixels de détection optique entrelacée avec les pixels de détection thermique.

## Revendications

1. Capteur (100) de motif thermique, configuré pour mesurer un motif thermique d'un élément disposé contre le capteur et en contact thermique direct avec le capteur, comportant plusieurs pixels (102), chaque pixel (102) comprenant au moins une capacité pyroélectrique formée par au moins une portion de matériau pyroélectrique (106) disposée entre une électrode inférieure (108) et une électrode supérieure (110), dans lequel l'une (108) des électrodes inférieure et supérieure correspond à une électrode de lecture du pixel (102), **caractérisé en ce qu'** un élément chauffant apte à chauffer la portion de matériau pyroélectrique (106) de la capacité pyroélectrique dudit pixel (102) par effet Joule lors d'une mesure du motif thermique par la capacité pyroélectrique dudit pixel (102) est formé par l'autre (110) des électrodes inférieure et supérieure, et **en ce qu'**il comporte en outre des moyens d'application d'une tension de chauffage constante aux extrémités de ladite autre (110) des électrodes inférieure et supérieure, créant une différence de potentiels électriques non nulle entre ces extrémités.

2. Capteur (100) selon la revendication 1, dans lequel le matériau pyroélectrique comporte du PVDF et/ou du P(VDF-TrFE) et/ou du PZT.

**3.** Capteur (100) selon l'une des revendications précédentes, comportant en outre un substrat (104) sur lequel sont disposées les capacités pyroélectriques des pixels (102), l'électrode inférieure (108) de la capacité pyroélectrique de chaque pixel (102) étant disposée entre le substrat (104) et la portion de matériau pyroélectrique (106) de la capacité pyroélectrique du pixel (102), et dans lequel l'électrode supérieure (110) de la capacité pyroélectrique de chaque pixel (102) forme l'élément chauffant dudit pixel (102).

**4.** Capteur (100) selon l'une des revendications précédentes, dans lequel les électrodes (108) des capacités pyroélectriques des pixels (102) correspondant aux électrodes de lecture des pixels (102) sont formées par des premières portions de matériau électriquement conducteur distinctes et isolées électriquement les unes des autres.

**5.** Capteur (100) selon l'une des revendications précédentes, dans lequel les électrodes (110) des capacités pyroélectriques des pixels (102) correspondant aux éléments chauffants sont reliées électriquement entre elles et sont formées par au moins une deuxième portion (111) de matériau électriquement conducteur dotée de deux extrémités (116, 118) sur lesquelles une tension de chauffage du matériau pyroélectrique (106) des capacités pyroélectriques des pixels (102) est apte à être appliquée.

**6.** Capteur (100) selon l'une des revendications 1 à 4, dans lequel :

- les pixels (102) sont disposés en formant une matrice de plusieurs lignes et plusieurs colonnes de pixels (102),
- les électrodes (110) des capacités pyroélectriques de chaque ligne de pixels (102) correspondant aux éléments chauffants sont reliées électriquement entre elles et sont formées par une deuxième portion (111) de matériau électriquement conducteur distincte des deuxièmes portions (111) de matériau électriquement conducteur des autres lignes de pixels (102),
- chaque deuxième portion (111) de matériau électriquement conducteur comporte deux extrémités (116, 118) sur lesquelles une tension de chauffage du matériau pyroélectrique (106) des capacités pyroélectriques de la ligne de pixels (102) est apte à être appliquée.

**7.** Capteur (100) selon la revendication 6, dans lequel l'une des deux extrémités (118) de chaque deuxième portion (111) de matériau électriquement conducteur sont reliées électriquement entre elles.

**8.** Capteur (100) selon l'une des revendications 6 ou 7, dans lequel chaque deuxième portion (111) de matériau électriquement conducteur comporte, au niveau de chacune des électrodes (110) formées par ladite deuxième portion (111) de matériau électriquement conducteur, des parties (122) dont la résistance électrique est supérieure à celle du reste (124) de ladite deuxième portion (111) de matériau électriquement conducteur.

**9.** Capteur (100) selon l'une des revendications 5 à 8, comportant en outre des moyens d'application de la tension de chauffage aux extrémités (116, 118) de la ou des deuxièmes portions (111) de matériau électriquement conducteur tels que, lors d'une mesure du motif thermique par l'un des pixels (102), la valeur du potentiel électrique sur l'électrode (110) formant l'élément chauffant dudit pixel (102) soit sensiblement constante tout au long de la mesure.

**10.** Capteur (100) selon l'une des revendications 5 à 9, dans lequel les pixels (102) sont disposés en formant une matrice de plusieurs lignes et plusieurs colonnes de pixels (102), et dans lequel chaque pixel (102) comporte au moins un transistor (130) de sélection de ligne apte recevoir sur sa grille un signal de commande commun à toute la ligne de pixels (102) à laquelle appartient ledit pixel (102) et, lorsque le transistor (130) de sélection de ligne est à l'état passant, à relier électriquement l'électrode de lecture dudit pixel (102) à un circuit de lecture (131) comprenant au moins un amplificateur (132, 144) et commun aux pixels (102) de la colonne à laquelle appartient ledit pixel (102).

**11.** Capteur (100) selon la revendication 10, dans lequel le transistor (130) de sélection de ligne est relié à une entrée inverseuse de l'amplificateur (132), et dans lequel le circuit de lecture (131) comporte en outre :

- des moyens d'application d'une tension de référence sur une entrée non inverseuse de l'amplificateur (132),
- un interrupteur (136) reliant l'entrée inverseuse de l'amplificateur (132) à la sortie de l'amplificateur (132),
- une capacité (134) reliant l'entrée inverseuse de l'amplificateur (132) à la sortie de l'amplificateur (132).

**12.** Capteur (100) selon la revendication 11, comportant en outre un circuit de commande apte à mettre en oeuvre, pour la lecture d'une ligne de pixels (102), au moins les étapes suivantes :

- mise à l'état passant des transistors (130) de sélection de ligne des pixels (102) de ladite ligne et fermeture des interrupteurs (136) des circuits de lecture (131),

- application de la tension de chauffage aux extrémités (116, 118) de la deuxième portion (111) de matériau électriquement conducteur ou d'une des deuxièmes portions (111) de matériau électriquement conducteur associée à ladite ligne de pixels (102),

- ouverture des interrupteurs (136) des circuits de lecture (131),

- attente d'un temps d'intégration correspondant à la mesure du motif thermique par les pixels (102) de ladite ligne,

- lecture d'une tension de sortie de l'amplificateur (132).

13. Capteur (100) selon la revendication 10, dans lequel chaque pixel (102) comporte en outre :

- un transistor (140) de réinitialisation apte à appliquer une tension de réinitialisation sur l'électrode de lecture (108) du pixel (102),
- un transistor (142) suiveur de tension dont une grille est reliée à l'électrode de lecture (108) du pixel (102) et dont l'une des électrodes de source et de drain est reliée au transistor (130) de sélection de ligne.

14. Capteur (100) selon la revendication 13, comportant en outre un circuit de commande apte à mettre en oeuvre, pour la lecture d'une ligne de pixels (102), au moins les étapes suivantes :

- mise à l'état passant des transistors (140) de réinitialisation des pixels (102) de ladite ligne,
- mise à l'état bloqué des transistors (130) de sélection de ligne des pixels (102) de ladite ligne,
- application de la tension de chauffage aux extrémités (116, 118) de la deuxième portion (111) de matériau électriquement conducteur ou d'une des deuxièmes portions (111) de matériau électriquement conducteur associée à ladite ligne de pixels (102),
- mise à l'état bloqué des transistors (140) de réinitialisation des pixels (102) de ladite ligne,
- attente d'un temps d'intégration correspondant à la mesure du motif thermique par les pixels (102) de ladite ligne,
- mise à l'état passant des transistors (130) de sélection de ligne des pixels (102) de ladite ligne,
- lecture des tensions appliquées sur les entrées des amplificateurs (144) des circuits de lecture.

**Patentansprüche**

1. Wärmemustersensor (100), konfiguriert, um ein Wärmemuster eines Elements zu messen, das gegen den Sensor angeordnet ist und in direktem thermischen Kontakt mit dem Sensor steht, mehrere Pixel (102) beinhaltend, wobei jedes Pixel (102) mindestens eine pyroelektrische Kapazität umfasst, die aus mindestens einem pyroelektrischen Materialabschnitt (106) gebildet ist, der zwischen einer unteren Elektrode (108) und einer oberen Elektrode (110) angeordnet ist, wobei die eine (108) der unteren und oberen Elektroden einer Ableseelektrode des Pixels (102) entspricht, **dadurch gekennzeichnet, dass** ein Heizelement, das geeignet ist, den pyroelektrischen Materialabschnitt (106) der pyroelektrischen Kapazität des Pixels (102) durch Joule-Effekt zu erwärmen während einer Messung des Wärmemusters durch die pyroelektrische Kapazität des Pixels (102), durch die andere (110) der unteren und oberen Elektroden gebildet wird, und dass er ferner Mittel zum Anlegen einer konstanten Heizspannung an den Enden der anderen (110) der unteren und oberen Elektroden beinhaltet, eine elektrische Potentialdifferenz ungleich null zwischen diesen Enden erzeugend.

2. Sensor (100) nach Anspruch 1, wobei das pyroelektrische Material PVDF und/oder P(VDF-TrFE) und/oder PZT beinhaltet.

3. Sensor (100) nach einem der vorhergehenden Ansprüche, ferner ein Substrat (104) beinhaltend, auf dem die pyroelektrischen Kapazitäten der Pixel (102) angeordnet sind, wobei die untere Elektrode (108) der pyroelektrischen Kapazität jedes Pixels (102) zwischen dem Substrat (104) und dem pyroelektrischen Materialabschnitt (106) der pyroelektrischen Kapazität des Pixels (102) angeordnet ist, und wobei die obere Elektrode (110) der pyroelektrischen Kapazität jedes Pixels (102) das Heizelement des Pixels (102) bildet.

4. Sensor (100) nach einem der vorhergehenden Ansprüche, wobei die Elektroden (108) der pyroelektrischen Kapazitäten der Pixel (102), die den Ableseelektroden (102) der Pixel entsprechen, durch erste elektrisch leitende Materialabschnitte gebildet sind, die voneinander verschieden und elektrisch isoliert sind.

5. Sensor (100) nach einem der vorhergehenden Ansprüche, wobei die den Heizelementen entsprechenden Elektroden (110) der pyroelektrischen Kapazitäten der Pixel (102) elektrisch miteinander verbunden sind und durch mindestens einen zweiten elektrisch leitenden Materialabschnitt (111) gebildet sind, der mit zwei Enden (116, 118) versehen ist, an denen eine Heizspannung des pyroelektrischen Materials (106) der pyroelektrischen Kapazitäten der Pixel (102) geeignet ist, angelegt zu werden.

6. Sensor (100) nach einem der Ansprüche 1 bis 4, wobei:

- die Pixel (102) angeordnet sind, um eine Matrix aus mehreren Zeilen und mehreren Spalten von Pixeln (102) zu bilden,
- die Elektroden (110) der pyroelektrischen Kapazitäten jeder Pixelzeile (102), den Heizelementen entsprechend, elektrisch miteinander verbunden sind und durch einen zweiten elektrisch leitendem Materialabschnitt (111) gebildet sind, der von den zweiten elektrisch leitenden Materialabschnitten (111) der anderen Pixelzeilen (102) verschieden ist,
- jeder zweite elektrisch leitende Materialabschnitt (111) zwei Enden (116, 118) beinhaltet, an denen eine Heizspannung des pyroelektrischen Materials (106) der pyroelektrischen Kapazitäten der Pixelzeile (102) geeignet ist, angelegt zu werden.

7. Sensor (100) nach Anspruch 6, wobei eines der zwei Enden (118) jedes zweiten elektrisch leitenden Materialabschnitts (111) elektrisch miteinander verbunden sind.

8. Sensor (100) nach einem der Ansprüche 6 oder 7, wobei jeder zweite elektrisch leitende Materialabschnitt (111) im Bereich jeder der Elektroden (110), die durch den zweiten elektrisch leitenden Materialabschnitt (111) gebildet sind, Teile (122) beinhaltet, deren elektrischer Widerstand größer ist als jener des Restes (124) des zweiten elektrisch leitenden Materialabschnitts (111).

9. Sensor (100) nach einem der Ansprüche 5 bis 8, ferner Mittel zum Anlegen der Heizspannung an die Enden (116, 118) des oder der zweiten elektrisch leitenden Materialabschnitte (111) beinhaltend, so dass, bei einer Messung des Wärmemusters durch einen der Pixel (102), der Wert des elektrischen Potentials an der Elektrode (110), die das Heizelement des Pixels (102) bildet, während der gesamten Messung im Wesentlichen konstant ist.

10. Sensor (100) nach einem der Ansprüche 5 bis 9, wobei die Pixel (102) angeordnet sind, um eine Matrix aus mehreren Zeilen und mehreren Spalten von Pixeln (102) zu bilden, und wobei jedes Pixel (102) mindestens einen Zeilenauswahltransistor (130) beinhaltet, der geeignet ist, auf seinem Gate ein Steuersignal zu empfangen, das für die Pixel (102) der gesamten Zeile, zu der das Pixel (102) gehört, einheitlich ist, und, während sich der Zeilenauswahltransistor (130) im Durchlasszustand befindet, die Ableseelektrode des Pixels (102) elektrisch mit einer Ableseschaltung (131) zu verbinden, mindestens einen Verstärker (132, 144) umfassend und einheitlich für die Pixel (102) der Spalte, zu der das Pixel (102) gehört.

11. Sensor (100) nach Anspruch 10, wobei der Zeilenauswahltransistor (130) mit einem invertierenden Eingang des Verstärkers (132) verbunden ist und wobei die Ableseschaltung (131) ferner beinhaltet:

- Mittel zum Anlegen einer Referenzspannung an einen nichtinvertierenden Eingang des Verstärkers (132),
- einen Schalter (136), der den invertierenden Eingang des Verstärkers (132) mit dem Ausgang des Verstärkers (132) verbindet,
- eine Kapazität (134), die den invertierenden Eingang des Verstärkers (132) mit dem Ausgang des Verstärkers (132) verbindet.

12. Sensor (100) nach Anspruch 11, ferner eine Steuerschaltung beinhaltend, geeignet, um zur Ablesung einer Pixelzeile (102) mindestens die folgenden Schritte durchzuführen:

- Versetzen in den Durchlasszustand eines Zeilenauswahltransistors (130) der Pixel (102) der Zeile und Schließen des Schalters (136) der Ableseschaltungen (131),
- Anlegen der Heizspannung an die Enden (116, 118) des zweiten elektrisch leitenden Materialabschnitts (111) oder an eines der zweiten elektrisch leitenden Materialabschnitte (111), die der Pixelzeile (102) zugeordnet sind,
- Öffnen der Schalter (136) der Ableseschaltungen (131),
- Abwarten einer Integrationszeit, die der Messung des Wärmemusters durch die Pixel (102) der Zeile entspricht,
- Ablesen einer Ausgangsspannung des Verstärkers (132).

13. Sensor (100) nach Anspruch 10, wobei jedes Pixel (102) ferner beinhaltet:

- einen Rückstellungstransistor (140), geeignet, um eine Rückstellungsspannung an der Ableseelektrode (108) des Pixels (102) anzulegen,
- einen Spannungsfolgertransistor (142), von dem ein Gate mit der Ableseelektrode (108) des Pixels (102) verbunden ist, und von dem eine der Quell- und Drain-Elektroden mit dem Zeilenauswahltransistor (130) verbunden ist.

14. Sensor (100) nach Anspruch 13, ferner eine Steuerschaltung beinhaltend, geeignet, um zur Ablesung einer Pixelzeile (102) mindestens die folgenden Schritte durchzuführen:

- Versetzen in den Durchlasszustand von Rückstellungstransistoren (140) von Pixeln (102) der Zeile,
- Versetzen in den Sperrzustand von Zeilenauswahltransistoren (130) der Pixel (102) der Zeile,
- Anlegen der Heizspannung an die Enden (116, 118) des zweiten elektrisch leitenden Materialabschnitts (111) oder an eines der zweiten elektrisch leitenden Materialabschnitte (111), die der Pixelzeile (102) zugeordnet sind,
- Versetzen in den Sperrzustand von Rückstellungstransistoren (140) der Pixel (102) der Zeile,
- Abwarten einer Integrationszeit, die der Messung des Wärmemusters durch die Pixel (102) der Zeile entspricht,
- Versetzen in den Durchlasszustand von Zeilenauswahltransistoren (130) der Pixel (102) der Zeile,
- Ablesen der Spannungen, die an den Eingängen der Verstärker (144) der Ableseschaltungen angelegt sind.

**Claims**

1. Thermal pattern sensor (100) configured to measure a thermal pattern of an element arranged against the sensor and in direct thermal contact with the sensor, comprising a plurality of pixels (102), each pixel (102) comprising at least one pyroelectric capacitance formed by at least one portion of pyroelectric material (106) arranged between a lower electrode (108) and an upper electrode (110), in which one (108) of the lower and upper electrodes corresponds to an electrode for reading the pixel (102), **characterized in that** a heating element that can heat the portion of pyroelectric material (106) of the pyroelectric capacitance of said pixel (102) by Joule effect during a measurement of the thermal pattern by the pyroelectric capacitance of said pixel (102) is formed by the other (110) of the lower and upper electrodes, and **in that** it further comprises means for applying a constant heating voltage to the ends of said other (110) of the lower and upper electrodes, thus creating a non-zero difference in electrical potentials between these ends.

2. Sensor (100) according to claim 1, in which the pyroelectric material comprises PVDF and/or P(VDF-TrFE) and/or PZT.

3. Sensor (100) according to one of the preceding claims, further comprising a substrate (104) on which are arranged the pyroelectric capacitances of the pixels (102), the lower electrode (108) of the pyroelectric capacitance of each pixel (102) being arranged between the substrate (104) and the portion of pyroelectric material (106) of the pyroelectric capacitance of the pixel (102), and in which the upper electrode (110) of the pyroelectric capacitance of each pixel (102) forms the heating element of said pixel (102).

4. Sensor (100) according to one of the preceding claims, in which the electrodes (108) of the pyroelectric capacitances of the pixels (102) corresponding to the electrodes for reading the pixels (102) are formed by first distinct portions of electrically conductive material and electrically insulated from each other.

5. Sensor (100) according to one of the preceding claims, in which the electrodes (110) of the pyroelectric capacitances of the pixels (102) corresponding to the heating elements are electrically connected together and are formed by at least one second portion (111) of electrically conductive material provided with two ends (116, 118) to which a heating voltage of the pyroelectric material (106) of the pyroelectric capacitances of the pixels (102) is capable of being applied.

6. Sensor (100) according to one of claims 1 to 4, in which:

- the pixels (102) are arranged by forming a matrix of several lines and several columns of pixels (102),
- the electrodes (110) of the pyroelectric capacitances of each line of pixels (102) corresponding to the heating elements are electrically connected together and are formed by a second portion (111) of electrically conductive material distinct from the second portions (111) of electrically conductive material of the other lines of pixels (102),
- each second portion (111) of electrically conductive material comprises two ends (116, 118) to which a heating voltage of the pyroelectric material (106) of the pyroelectric capacitances of the line of pixels (102) is capable of being applied.

7. Sensor (100) according to claim 6, in which one of the two ends (118) of each second portion (111) of electrically conductive material are electrically connected together.

8. Sensor (100) according to one of claims 6 or 7, in which each second portion (111) of electrically conductive material comprises, at each of the electrodes (110) formed by said second portion (111) of electrically conductive material, parts (122) of which the electrical resistance is greater than that of the remainder (124) of said second portion (111) of electrically conductive material.

9. Sensor (100) according to one of claims 5 to 8, further comprising means for applying the heating voltage to the ends (116, 118) of the second portion(s) (111) of electrically conductive material such that, during a measurement of the thermal pattern by one of the pixels (102), the value of the electrical potential on the electrode (110) forming the heating element of said pixel (102) is substantially constant throughout the measurement.

10. Sensor (100) according to one of claims 5 to 9, in which the pixels (102) are arranged by forming a matrix of several lines and several columns of pixels (102), and in which each pixel (102) comprises at least one line selection transistor (130) capable of receiving on its gate a control signal common to the entire line of pixels (102) to which said pixel (102) belongs and, when the line selection transistor (130) is in the on state, electrically connecting the electrode for reading said pixel (102) to a reading circuit (131) including at least one amplifier (132, 144) and common to the pixels (102) of the column to which said pixel (102) belongs.

11. Sensor (100) according to claim 10, in which the line selection transistor (130) is connected to an inverting input of the amplifier (132), and in which the reading circuit (131) further comprises:

    - means for applying a reference voltage to a non-inverting input of the amplifier (132),
    - a switch (136) connecting the inverting input of the amplifier (132) to the output of the amplifier (132),
    - a capacitance (134) connecting the inverting input of the amplifier (132) to the output of the amplifier (132).

12. Sensor (100) according to claim 11, further comprising a control circuit capable of implementing, for reading a line of pixels (102), at least the following steps:

    - turning on the line selection transistors (130) of the pixels (102) of said line and closing the switches (136) of the reading circuits (131),
    - application of the heating voltage to the ends (116, 118) of the second portion (111) of electrically conductive material or one of the second portions (111) of electrically conductive material associated with said line of pixels (102),
    - opening the switches (136) of the reading circuits (131),
    - waiting for an integration time corresponding to the measurement of the thermal pattern by the pixels (102) of said line,
    - reading an output voltage of the amplifier (132).

13. Sensor (100) according to claim 10, in which each pixel (102) further comprises:

    - a reset transistor (140) capable of applying a reset voltage to the reading electrode (108) of the pixel (102),
    - a voltage follower transistor (142) of which one gate is connected to the reading electrode (108) of the pixel (102) and of which one of the source and drain electrodes is connected to the line selection transistor (130).

14. Sensor (100) according to claim 13, further comprising a control circuit capable of implementing, for reading a line of pixels (102), at least the following steps:

    - turning on the reset transistors (140) of the pixels (102) of said line,
    - turning off the line selection transistors (130) of the pixels (102) of said line,
    - application of the heating voltage to the ends (116, 118) of the second portion (111) of electrically conductive material or one of the second portions (111) of electrically conductive material associated with said line of pixels (102),
    - turning off the reset transistors (140) of the pixels (102) of said line,
    - waiting for an integration time corresponding to the measurement of the thermal pattern by the pixels (102) of said line,
    - turning on the line selection transistors (130) of the pixels (102) of said line,
    - reading the voltages applied to the inputs of the amplifiers (144) of the reading circuits.

FIG.1

FIG.2

FIG.3

FIG.4

FIG.5

FIG.6

FIG.7

## RÉFÉRENCES CITÉES DANS LA DESCRIPTION

**Documents brevets cités dans la description**

- US 4394773 A
- US 4429413 A
- US 6289114 B
- WO 2008107450 A
- US 6091837 A
- EP 2385486 A1